# EUROPÄISCHE PATENTSCHRIFT

(11) **EP 1 801 696 B1**
(45) Veröffentlichungstag und Bekanntmachung des Hinweises auf die Patenterteilung: **28.03.2012**
(21) Anmeldenummer: 06022668.5
(22) Anmeldetag: 30.10.2006
(51) Int. Cl.: G06F 9/46

(54) **Multithreading - fähige virtuelle Maschine**
Multithreaded virtual machines
Machines virtuelles multifilières

(30) Priorität: 25.11.2005 DE 102005056357
(43) Veröffentlichungstag der Anmeldung: 27.06.2007
(73) Patentinhaber: Giesecke & Devrient GmbH, 81677 München (DE)
(72) Erfinder: Effing, Wolfgang, 85659 Forstern (DE); Spitz, Stephan, Dr., 81245 München (DE)

(56) Entgegenhaltungen:
- US-A1- 2003 097 360
- US-A1- 2004 221 290
- US-A1- 2005 198 303
- US-B1- 6 941 105
- "Allocating system resources to a virtual machine" [Online] 8. Oktober 2004 (2004-10-08), IBM , XP002476157 Gefunden im Internet: URL:http://www.microsoft.com/technet/prodt echnol/virtualserver/2005/proddocs/vs_oper ate_using_config_allocSysRes.mspx?pf=true> [gefunden am 2008-04-08] Siehe Absatz: "Allocating resources by capacity"

## Beschreibung

Die vorliegende Erfindung betrifft ein Verfahren zum Ausführen von Applikationen durch eine auf einem portablen Datenträger installierte virtuelle Maschine sowie einen entsprechend eingerichteten portablen Datenträger.

Es ist ein bekanntes Konzept bei gängigen Computern und insbesondere bei portablen Datenträgern, wie z.B. Chipkarten, und eingebetteten Systemen ("Embedded Systems"), die Ausführung von plattformunabhängigen und portierbaren Applikationen mittels einer auf dem Computer installierten virtuellen Maschine zu ermöglichen. Die Installation einer virtuellen Maschine z.B. auf einem portablen und mit einem Prozessor ausgestatteten Datenträger, wie z.B. einer Chipkarte, schafft eine von der eigentlichen Hardware und den spezifischen Vorgaben des Betriebssystems des Datenträgers unabhängige Laufzeitumgebung. Innerhalb dieser Laufzeitumgebung können plattformunabhängige und demzufolge leicht portierbare Applikationen entwickelt und ausgeführt werden, die ausschließlich die Vorgaben der virtuellen Maschine zu berücksichtigen haben. Mittels einer virtuellen Maschine wird also von der konkreten Hardware des Datenträgers bzw. seines Betriebssystems derart abstrahiert, dass anstelle auf die spezifischen Programmierschnittstellen des hardwarenäheren Betriebssystems lediglich auf die von der virtuellen Maschine bereitgestellten plattformunabhängigen Programmierschnittstellen, beispielsweise API (Application Programming Interface) oder ByteCode-Interpreter, zugegriffen werden muss. Die virtuelle Maschine fungiert also als Schnittstelle zwischen einer plattformunabhängig programmierten Applikation und dem hardwarenäheren Betriebssystem. Das Betriebssystem umfasst neben einer Vielzahl von Systemprogrammen einen Betriebssystemkern für zentrale und sicherheitskritische Aufgaben, der die eigentliche Schnittstelle zur Hardware bildet und z.B. die Prozess- und Betriebsmittelverwaltung übernimmt. Dabei werden die Prozesse und/ oder Threads der virtuellen Maschine von dem Betriebssystem in Betriebssystemprozesse umgesetzt, welche von dem Prozessor des Computers bzw. der Chipkarte ausgeführt werden können.

Problematisch kann es sein, wenn auf einer virtuellen Maschine mehrere Applikationen nebenläufig ausgeführt werden. Insbesondere bei sicherheitskritischen Applikationen, zum Beispiel bei der Authentifikation oder Identifikation von Personen oder bei der kryptografischen Sicherung, ist es wichtig, dass die von der virtuellen Maschine nebenläufig ausgeführten Applikationen logisch strikt voneinander getrennt sind. Auch der Zugriff der Applikationen auf die Betriebsmittel des Computers muß entsprechend kontrolliert werden. Das betrifft z.B. die Inanspruchnahme von Prozessorzeit oder Speicherplatz oder Zugriffe auf Ein-/ Ausgabeschnittstellen.

Es ist andererseits auch möglich, in einem multitaskingfähigen Betriebssystem zur logischen Separation der auszuführenden Applikationen für jede Applikation eine eigene virtuelle Maschine auszuführen. Anders als bei der nebenläufigen Ausführung mehrerer Applikationen auf derselben virtuellen Maschine ist es hierbei möglich, jede Applikation bzw. jeden Ausführungspfad (Thread) einer Applikation unmittelbar auf Betriebssystemprozesse abzubilden. So kann der Zugriff der Applikationen auf Betriebsmittel von dem Betriebssystem kontrolliert werden. Es besteht jedoch das Problem, dass die Umsetzung jeder Applikation bzw. jeden Ausführungsdfades in korrespondierende Betriebssystemprozesse ("native threads") aufgrund eines erhöhten Verwaltungsaufwands vergleichsweise ineffizient und zumindest für portable Datenträger, die nur mit geringen Ressourcen ausgestattet sind, oftmals nichtmöglich ist.

Bei einer alternativen Technik der sogenannten "green threads" schottet dagegen eine virtuelle Maschine die von ihr ausgeführten Applikationsprozesse von dem Betriebssystem ab. Dadurch ergibt sich einerseits zwar eine geringere Abhängigkeit der Applikationen von dem Betriebssystem, andererseits ist eine kontrollierte Betriebsmittelvergabe durch das Betriebssystem nicht möglich, sondern erfolgt durch die virtuelle Maschine.

US 20050198303 A1 beschreibt einen Server, der in Antwort auf eine Dienstanfrage prüft, ob bereits eine virtuelle Maschine läuft, die den Dienst bereitstellt, und gegebenenfalls eine neue virtuelle Maschine startet.

US 20030097360 A1 betrifft ein System mit mehreren virtuellen multi-threading-fähigen Maschinen auf einem Rechner. Neben einem geteilten Objekt, auf welches zwei oder mehr virtuelle Maschinen zugreifen können, gibt es zumindest ein Objekt, auf welches nur eine virtuelle Maschine zugreifen kann.

In dem Artikel "Routing control of APPC TPN's in a hot pool environment" wird vorgeschlagen, in einem System mit mehreren virtuellen Maschinen vorab bekannte Applikationen als eine Gruppe zu definieren, die nebenläufig in derselben virtuellen Maschinen ausgeführt werden dürfen.

Es ist demzufolge die Aufgabe der vorliegenden Erfindung, die Ausführung von Applikationen durch virtuelle Maschinen sicher und effizient zu gestalten, so dass sie auch für portable Datenträger geeignet ist.

Diese Aufgabe wird erfindungsgemäß durch ein Verfahren und einen portablen Datenträger mit den Merkmalen der unabhängigen Ansprüche gelöst. Die abhängigen Ansprüche beschrieben vorteilhafte Ausgestaltungen und Weiterbildungen der Erfindung.

Erfindungsgemäß wird auf einem portablen Datenträger eine virtuelle Maschine unter Kontrolle eines Betriebssystemkerns mehrfach nebenläufig ausgeführt. Hierbei führt zumindest eine der nebenläufig ausgeführten virtuellen Maschinen ihrerseits zumindest zwei Ausführungspfade zumindest einer Applikation nebenläufig aus. Der Betriebssystemkern teilt jeder der ausgeführten virtuellen Maschinen ein bestimmtes Kontingent von Betriebsmitteln zu, auf das die von der virtuellen Maschine ausgeführten Ausführungspfade bzw. Applikationen zugreifen können. Applikationen bzw. Ausführungspfade können also nur auf diejenigen Betriebsmittel zugreifen, die in dem Betriebsmittelkontingent enthalten sind, welches der ausführenden virtuellen Maschine von dem Betriebssystemkern zugeteilt wurde.

Durch die direkte Zuteilung von verschiedenen Betriebsmittelkontingenten an nebenläufig ausgeführte virtuelle Maschinen, die ihrerseits mehrere Applikationen bzw. Ausführungspfade nebenläufig ausführen können, besitzt der Betriebssystemkern die unmittelbare Kontrolle über die Betriebsmittelvergabe an eine Gruppe von Ausführungspfaden und / oder Applikationen. Hierdurch wird einerseits ein hohes Sicherheitsniveau erreicht, da der Zugriff von Applikationen auf Betriebsmittel des Datenträgers auf Betriebssystemebene überwacht wird und z.B. von der Vertrauenswürdigkeit einer Applikation abhängig gemacht werden kann. Andererseits wird ein effizientes nebenläufiges Ausführen der Ausführungspfade und/ oder Applikationen von einer virtuellen Maschine ermöglicht, da die virtuelle Maschine die Nebenläufigkeit weitgehend unabhängig von dem Betriebssystem des Datenträgers organisieren kann.

Für jede auszuführenden Applikation prüft der Betriebssystemkern zunächst anhand einer Zugriffsberechtigung der Applikation, auf welche Betriebsmittel diese Applikation zugreifen darf. Anschließend wird die Applikation derjenigen virtuellen Maschine zur Ausführung zugewiesen, deren zugeteiltes Betriebsmittelkontingent die Zugriffsberechtigung der auszuführenden Applikation entspricht. Auf diese Weise kann ein differenziertes, vom Betriebssystemkern unmittelbar kontrolliertes Sicherheitssystem aus abgestuften Zugriffsberechtigungen bzw. Betriebsmittelzugriffen aufgebaut werden, das den Ansprüchen eines in einem sicherheitskritischen Kontext operierenden Datenträgers genügt.

Die Zugriffsberechtigung einer Applikation kann beispielsweise aus einer vorhergehenden Benutzerauthentisierung desjenigen Benutzers, der die Applikation ausführen möchte, abgeleitet werden, z.B. aus einer am Datenträger eingegebenen Kennung oder PIN oder einer biometrische Authentisierung. Ebenso ist es möglich, eine im Programmcode der Applikation vorhandene Signatur durch den Betriebssystemkern zu überprüfen und daraus die Sicherheitsstufe für die Applikation abzuleiten und eine dazu passende virtuelle Maschine auszuwählen. Falls zu diesem Zeitpunkt keine virtuelle Maschine ausgeführt wird, die zu der Zugriffsberechtigung der auszuführenden Applikation passt, kann der Betriebssystemkern eine weitere virtuelle Maschine nebenläufig zu den bereits laufenden virtuellen Maschinen starten und dieser ein zu der Zugriffsberechtigung der auszuführenden Applikation korrespondierendes Betriebsmittelkontingent zuteilen.

Der Betriebssystemkern umfasst vorzugsweise eine definierte Zugriffsschnittstelle für die virtuellen Maschinen, über welche eine ausgeführte virtuelle Maschine für eine Applikation bestimmte Betriebsmittel anfordern kann. Über die Zugriffsschnittstelle werden dann auch die angeforderten Betriebsmittel von dem Betriebssystemkern bereitgestellt. Eine derartige definierte Schnittstelle entkoppelt die virtuellen Maschinen von dem multitaskingfähigen Betriebssystemkern und sichert das Betriebssystem sowie die Betriebsmittel des portablen Datenträgers vor missbräuchlichen Zugriffen.

Als weitere Sicherheitsmaßnahme kann der Betriebssystemkern die zu einem Zeitpunkt ausgeführten virtuellen Maschinen logisch voneinander isolieren, z.B. mittels einer Speicherverwaltungseinheit/Speicherschutzeinheit (MMU/MPU, "Memory Management/Protection Unit") des Prozessors des portablen Datenträgers, um die jeweiligen Speicherbereiche der virtuellen Maschinen vor Zugriffen durch nicht berechtigte Prozesse zu schützen. Ebenso ist es möglich, dass eine virtuelle Maschine die von ihr nebenläufig ausgeführten Applikationen aus Sicherheitsgründen logisch voneinander isoliert, z.B. mittels einer Applikations-Firewall der virtuellen Maschine.

Als bevorzugte portable Datenträger kommen z.B. Chipkarten mit Prozessor, sichere Multimediakarten, Mobilfunkkarten, USB-Speichermedien oder dergleichen, aber auch herkömmliche Computer sowie eingebettete Systeme ("embedded systems") in Frage. Hierbei ist die auf einem portablen Datenträger ausgeführte virtuelle Maschine vorzugsweise eine virtuelle Java-Maschine bzw. eine Java-Laufzeitumgebung mit einem Java-Interpreter zum Ausführen von Java-Bytecode-Applikationen ("Applets"). Ferner ist der portable Datenträger vorzugsweise mit einem Java-Card-Betriebssystem ausgestattet, dessen Betriebssystemkern zentrale Funktionen von Java-Card bereitstellt, insbesondere die Schnittstelle zur Hardware sowie die Prozess- und Betriebsmittelverwaltung. Auf einem mit Java-Card ausgestatteten portablen Datenträger kann dann ein sicherer Web-Server installiert werden, bei dem zur Beantwortung von Client-Anfragen Servlets ("Server Applets") von einer virtuellen Java-Maschine bzw. dem entsprechenden Java-Interpreter ausgeführt werden. Die Servlets haben dann nur auf die Betriebsmittel des Betriebsmittelkontingents der entsprechenden virtuellen Maschine Zugriff.

Weitere Merkmale und Vorteile der Erfindung ergeben sich aus der folgenden Beschreibung verschiedener erfindungsgemäßer Ausführungsbeispiele und Ausführungsalternativen im Zusammenhang mit den begleitenden Zeichnungen. Darin zeigen:
- Figur 1: eine schematische Darstellung der Beziehung zwischen Applikationen, virtuellen Maschinen, Betriebssystemkern und Hardware; und
- Figur 2: einen erfindungsgemäß ausgestatteten portablen Datenträger.

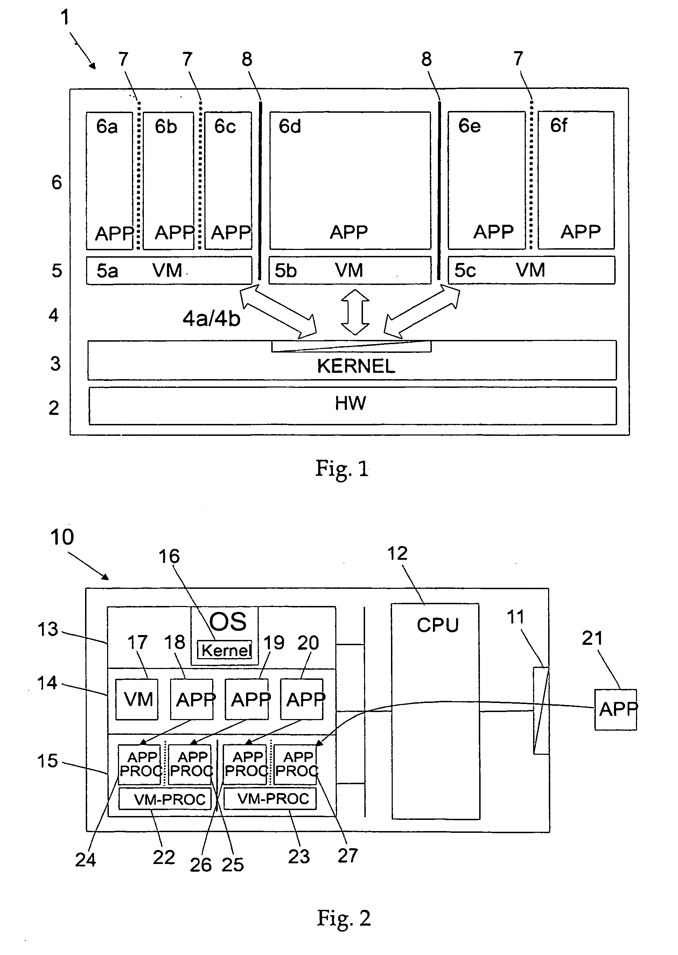

Figur 1 illustriert die hierarchischen Beziehungen der Komponenten eines mit einer virtuellen Maschine 5 ausgestatteten portabeln Datenträgers 1 bei der Ausführung von Applikationen 6, ausgehend von der Hardware 2 des Datenträgers 1. Logisch über der Hardware 2 ist das Betriebssystem mit dem hardwarenahen Betriebssystemkern 3 (KERNEL) angeordnet, der die Hardware 2 des Datenträgers 1 verwaltet. Über der Ebene des Betriebssystemkerns 3 liegt die Ebene der von der hardwarenahen Betriebssystemebene abstrahierenden Laufzeitumgebung ("Runtime Environment"), die im vorliegenden Ausführungsbeispiel eine Java-Laufzeitumgebung mit einer virtuellen Java-Maschine 5 ("Java Virtual Machine") als wichtigstem Bestandteil ist. In der Regel liegt die virtuelle Java-Maschine als Java-Interpreter vor, sie kann jedoch auch als Übersetzer ausgestaltet sein, z.B. als Just-in-Time-Compiler. Von der virtuellen Maschine 5 bzw. einem entsprechenden Java-Interpreter werden schließlich Java-Applikationen 6 ausgeführt, die vorher durch Kompilierung eines Java-Quellprogramms in ein plattformunabhängiges Zwischenformat erzeugt wurden, z.B. in das interpretierbare Java-Bytecode-Format. Ein ähnliches, im Rahmen der vorliegenden Erfindung ebenso einsetzbares Konzept einer virtuellen Laufzeitumgebung bietet das .NET-System mit der "Common Language Runtime" (CLR) als virtuelle Maschine zur Ausführung/Interpretation von CIL-Programmen ("Common Intermediate Language").

Bei der Ausführung einer plattformunabhängigen Applikation 6 müssen ihre Anweisungen bzw. die von der virtuellen Maschine 5 gebildeten Prozesse in hardwarenähere Anweisungen/Prozesse auf der Ebene des Betriebssystems umgesetzt werden. Ebenso muss für einen Zugriff einer Applikation 6 auf Betriebsmittel des Datenträgers 1, also auf dessen Hardware 2, eine Interaktion zwischen einer virtuellen Maschine 5 und den Betriebssystemkern 3 erfolgen. Hierzu besitzt der Betriebssystemkern 3 eine wohldefinierte und gesicherte Schnittstelle 4, über die Betriebsmittelanfragen 4a einer virtuellen Maschine 5 und Betriebsmittelzuteilungen 4b des Betriebssystemkerns 3 an die anfragende virtuelle Maschine 5 abgewickelt werden. Die Sicherung der Schnittstelle 4 besteht darin, dass nur Betriebsmittelanfragen von autorisierten virtuellen Maschinen 5 und/oder Applikationen 6 von dem Betriebssystemkern 3 entsprochen wird.

Der Betriebssystemkern 3 bzw. das Betriebssystem ist multitaskingfähig ausgestaltet, so dass mehrere virtuelle Maschinen 5a, 5b, 5c gleichzeitig nebenläufig (d.h. quasi-parallel) ausgeführt werden können. Die einzelnen virtuellen Maschinen 5a, 5b, 5c werden durch einen entsprechenden Betriebssystemmechanismus 8 logisch/ datentechnisch derart voneinander isoliert, dass kein nicht authorisierter Datenaustausch zwischen ihnen oder keine nicht authorisierten Zugriffe auf die Speicherbereiche fremder virtueller Maschinen 5a, 5b, 5c möglich ist. Hierzu kann eine Speicherverwaltungseinheit/Speicherschutzeinheit (MMU/MPU) des Prozessors eingesetzt werden, um die Adressräume der virtuellen Maschinen 5a, 5b, 5c zu verwalten und Fremdzugriffe auszuschließen.

Die ausgeführten virtuellen Maschinen 5a, 5b, 5c können multithreadingfähig sein, d.h. sie unterstützen das nebenläufige Abarbeiten mehrerer Ausführungsstränge ("Threads") innerhalb eines Prozesses. Dadurch kann jede virtuelle Maschine 5a, 5b, 5c ihrerseits mehrere Applikationen 6a-6c, 6d, 6e-6f gleichzeitig nebenläufig ausführen. Hierbei stellen die einzelnen virtuellen Maschinen 5a, 5b, 5c wiederum eine logische Isolation 7 der von ihnen nebenläufig ausgeführten Applikationen 6a-6c, 6e-6f her, z.B. mittels einer Applikations-Firewall, so dass auch die Applikationen 6a-6c, 6d, 6e-6f in geschützten Addressräumen/Speicherbereichen operieren können. Auf diese Weise ergibt sich in Figur 1 eine geschachtelte Nebenläufigkeit, indem einerseits die Applikationen 6a-6f von den entsprechenden virtuellen Maschine 5a-5c und andererseits die virtuellen Maschinen 5a-5c von dem Betriebssystemkern 3 nebenläufig ausgeführt werden. Da die virtuellen Maschinen 5a-5c zur Ausführung ihrer Applikationen 6a-6f ihre jeweiligen Prozesse und/ oder Threads unabhängig von der eigentlichen Prozessstruktur des Betriebssystemkerns 3 einrichten können, können die Applikationen 6a-6f effizient und ohne überflüssigen Verwaltungs- und Koordinationsaufwand zwischen der Ebene der virtuellen Maschinen 5 und der des Betriebssystemkerns 3 ausgeführt werden.

Die Anforderung 4a von Betriebsmitteln des Datenträgers 1 durch die Applikationen 6a-6f und die Zuteilung 4b von Betriebsmitteln durch den Betriebssystemkern 3 ist sicherheitskritischer Punkt, da ein unautorisierter und schädigender Zugriff z.B. auf sensible Speicherbereiche oder andere Systemressourcen die Integrität des Datenträgers 1 gefährden kann. Derartige zuteilungsbedürftige Betriebsmittel sind z.B. sämtliche Speicher eines Computers, wie z.B. Festplatten, Flash-Speicher, Arbeitsspeicher, etc., Ein-/Ausgabeschnittstellen und daran angeschlossene Peripheriegeräte, wie z.B. Drucker, Netzwerkzugänge oder dergleichen, oder der Prozessor selbst.

Die Betriebsmittel des Datenträgers 1 werden über die Schnittstelle 4 zwischen dem Betriebssystemkern 3 und den nebenläufig ausgeführten virtuellen Maschinen 5a, 5b, 5c unmittelbar von dem Betriebssystemkern 3 verwaltet und direkt zugeteilt. Auf diese Weise besteht eine Kontrolle der Betriebsmittel durch den Betriebssystemkern 2, da dieser die Betriebsmittel einerseits den einzelnen virtuellen Maschinen 5 als individuelle Betriebsmittelkontingente zuteilt und andererseits anfragende Applikationen 6a-6f nur auf die Betriebsmittel des der ausführenden virtuellen Maschinen 5a-5c zugeteilten Kontingents zugreifen können. Selbstverständlich können sich die Kontingente durchaus überlappen, so dass verschiedenen virtuellen Maschinen auch teilweise die gleichen Betriebsmittel zugeteilt werden. Die Zuordnung einer auszuführenden Applikation 6a-6f zu einer virtuellen Maschine 5a-5c wird dabei von dem Betriebssystemkern 3 aufgrund einer vorher geprüften Zugriffsberechtigung der jeweiligen Applikation 6a-6f vorgenommen, z.B. mittels für diesen Zweck von dem Betriebssystemkern 3 angelegten Zuordnungstabellen. Die Betriebsmittelvergabe 4b wird also ausschließlich von dem multitaskingfähigen Betriebssystemkern 3 vorgenommen und über die gemeinsame Zugriffsschnittstelle 4 den virtuellen Maschinen 5a-5c mitgeteilt.

Bei der individuellen Zuteilung bestimmter Betriebsmittelkontingente an die einzelnen virtuellen Maschinen 5a-5c können die den jeweiligen virtuellen Maschinen 5a-5c zugeteilten Kontingente gemäß vorgegebener Sicherheitskriterien so zugeteilt werden, dass die einzelnen virtuellen Maschinen 5a-5c als unterschiedliche Sicherheitsstufen bzw. Sicherheitslaufzeitumgebung zur Ausführung von bestimmten, der jeweiligen Sicherheitsstufe entsprechenden Applikationen 6a-6f ausgebildet werden können. Eine Applikation 6a-6f wird dann genau derjenigen virtuellen Maschine 5a-5c zur Ausführung zugeordnet, deren Betriebsmittelkontingent der von einer Applikation 6a-6f nachgewiesenen Zugriffsberechtigung entspricht.

Die Zugriffsberechtigung kann eine Authentisierung des Benutzers sein, der eine Applikation 6a-6f gestartet hat, oder direkt aus dem Programmcodes der jeweiligen Applikation 6a-6f abgeleitet werden. Hierbei sind verschiedene Authentisierungsverfahren denkbar, zum Beispiel digitale Programmcodesignaturen, Benutzerverifikationen über kryptografische Schlüssel, biometrische Identifikationen oder PINs, oder die Authentisierung im Challenge-Response-Verfahren.

Figur 2 illustriert eine erfindungsgemäß eingerichtete Chipkarte 10, umfassend einen Prozessor 12, eine Schnittstelle 11 zur Interaktion mit einem Kartenlesegerät oder dergleichen, sowie einer Speicherhierarchie, umfassend einen permanenten ROM-Speicher 13, einen wiederbeschreibbaren EEPROM-Speicher 14 und einen flüchtigen RAM-Arbeitsspeicher 15. Ebenso wie eine Chipkarten kann auch eine sichere Multimediakarte, Mobilfunkkarte, ein USB-Speichertoken oder gar ein eingebettetes System als erfindungsgemäßer portabler Datenträger entsprechend der Fig. 2 eingerichtet sein. Falls es sich bei dem portablen Datenträger um eine Chipkarte handelt, wird als Betriebssystem vorzugsweise Java-Card eingesetzt.

Das Betriebssystem mit dem Betriebssystemkern 16 liegt üblicherweise in dem permanenten ROM-Speicher 13 vor, während die virtuelle Maschine 17 bzw. ein Java-Interpreter zusammen mit einigen Java-Applikationen 18,19, 20 als ausführbare Programme im EEPROM-Speicher 14 abgelegt sind. In dem in Figur 2 dargestellten Beispiel wurde der Programmcode der virtuelle Maschine 17 bereits zweimal als unabhängige, nebenläufig ausgeführte Betriebssystemprozesse 22, 23 gestartet, wobei den beiden Betriebssystemprozessen 22, 23 bei ihrem Start vom Betriebssystemkern 16 verschiedene Betriebsmittelkontingente zugeordnet wurden. So hat beispielsweise die ausgeführte virtuelle Maschine 22 lediglich eine geringe Ausführungspriorität und einen demzufolge selteneren Prozessorzugriff, einen eingeschränkten Zugriff auf den RAM-Arbeitsspeicher 15 und der EEPROM-Speicher 14, sowie keinen Zugriff auf Ein-/ Ausgabeschnittstellen 11 und etwaige daran angeschlossene Peripheriegeräte, Netzwerke oder Kommunikationspartner. Die virtuelle Maschine 23 hat demgegenüber eine hohe Ausführungspriorität und kann entsprechend mehr Prozessorzeit in Anspruch nehmen. Darüber hinaus ist ihr ein umfassender Zugriff auf den Speicher des Datenträgers 10 sowie die sonstigen Betriebsmittel des Datenträgers 10 einschließlich der Kommunikationsschnittstelle 11 erlaubt.

Die ausgeführten virtuellen Maschinen 22, 23 bilden also zwei Sicherheitsstufen, wobei besonders vertrauenswürdige Applikationen 20, 21 von dem Betriebssystemkern 16 der virtuellen Maschine 23 zur Ausführung zugewiesen werden, während weniger vertrauenswürdige Applikationen 18,19 von der virtuellen Maschine 22 ausgeführt werden. Die auszuführenden Applikationen 18, 19, 20, 21 können dabei nicht nur solche Applikationen 18, 19, 20 sein, die auf dem Datenträger 10 vorliegen, sondern auch Applikationen 21 die von einem Kommunikationspartner über die Schnittstelle 11 empfangen werden, um auf dem Datenträger 10 ausgeführt zu werden. Bei dem vorliegenden Beispiel der Fig. 2 stellt der Betriebssystemkern 16 eine hohe Vertrauenswürdigkeit und somit eine umfassende Betriebsmittelzugriffsberechtigung der Applikation 21 fest und ordnet sie deshalb zur Ausführung der virtuellen Maschine 23 zu.

Die Applikationen 18, 19, 20, 21 bilden bei ihrer Ausführung Applikationsprozesse 24, 25, 26, 27 und belegen, wie auch die Betriebssystemprozesse 22, 23 der zwei ausgeführten virtuellen Maschinen, jeweils einen Speicherbereich im RAM-Arbeitsspeicher 15. Die Prozesse 22, 23 der virtuellen Maschinen und die Applikationsprozesse 24, 25, 26, 27 sind hierbei aus Sicherheitsgründen mittels bestimmter Speicherschutzmethoden (z.B. MMU/MPU, Applikations-Firewall) logisch so voneinander getrennt, dass ein Fremdzugriff nicht möglich ist. So werden einerseits die virtuellen Maschinen 22, 23 und andererseits die einzelnen Applikationsprozesse 24, 25, 26, 27 logisch voneinander getrennt ausgeführt.

Das erfindungsgemäße Konzept kann insbesondere zum Aufbau eines sicheren Web-Servers auf eine Chipkarte 10 eingesetzt werden, der bestimmte Applikationen 18, 19, 20 - sogenannte Java-Servlets - zum Entgegennehmen und Beantworten von Anfragen eines Clients ausführt. Die Servlets 18,19, 20 werden abhängig von der Autorisierung (Vertrauenswürdigkeit) eines Clients einem Servlet-Container einer bestimmten virtuellen Maschine 22, 23 zugeordnet und dadurch auf der entsprechende Sicherheitsstufe ausgeführt.

Abhängig von der Zugriffsberechtigung bzw. der Authentisierung eines HTTP/S-Clients, d.h. eines auf den Web-Server über das HTTP/S-Protokoll zugreifenden anderen Geräts, wird eine Anfrage von einem Servlet 18,19, 20 bearbeitet, das entsprechend der Vertrauenswürdigkeit des Clients Zugriff auf das von der ausführenden virtuellen Maschine 22, 23 bereitgestellte. So ist es beispielsweise möglich, dass der Betriebssystemkern 16 einem Servlet, welches von einem HTTP/S- Client ("Secure Hypertext Transmission Protocol") ohne eine SSL -Authentisierung ("Secure Socket Layer") angesprochen wird, nur einen eingeschränkten Betriebsmittelzugriff gewährt und es dem Servlet-Container der virtuellen Maschinen 22 mit eingeschränktem Betriebsmittelkontingent zuordnet. Andererseits kann ein Servlet, das von einem HTTP/S-Client mit sicherer SSL-Kryptografie und Authentisierung durch ein SSL-Zertifikat angesprochen wird, von der virtuellen Maschine 23 mit umfangreichem Betriebsmittelkontingent ausgeführt werden.

Die vorliegende Erfindung wurde mit Bezug auf die Figuren für mehrere nebenläufig ausgeführte Applikationen in einer virtuellen Maschine beschrieben. Sie ist aber analog anwendbar auf nebenläufig ausgeführte Ausführungspfade der gleichen Applikation in einer virtuellen Maschine. Eine Applikation kann aus genau einem Ausführungspfad bestehen. Ebenso möglich sind Kombinationen aus diesen Gestaltungen, also beispielsweise mehrere Ausführungspfade zumindest einer ersten Applikation und zumindest eine zweite Applikation mit genau oder zumindest einem Ausführungspfad werden in einer der virtuellen Maschinen ausgeführt.

## Patentansprüche

1. Verfahren zum Ausführen mehrerer Ausführungspfade zumindest einer Applikation (6a-6f; 24-27), umfassend die Schritte
- eines mehrfachen nebenläufigen Ausführens einer virtuellen Maschine (5a-5c; 22, 23) durch den Prozessor (12) des Datenträgers; und
- eines nebenläufiges Ausführen von mindestens zwei der mehreren Ausführungspfade durch eine der nebenläufig ausgeführten virtuellen Maschinen (5a-5c; 22, 23), wobei die mindestens zwei Ausführungspfade Elusführungspfade unterschiedlicher Applikationen (6a-6f; 24-27) sind;
- Zuteilen von Betriebsmittelkontingenten an die nebenläufig ausgeführten virtuellen Maschinen (5a-5c; 22, 23);
- Prüfen einer Berechtigung einer auszuführenden Applikation (6a-6f; 24-27);
- Auswählen einer der virtuellen Maschinen (5a-5c; 22, 23) zum Ausführen der Applikation (6a-6f; 24-27);
**dadurch gekennzeichnet, dass**
das Verfahren auf einem Prozessor (12) eines portablen Datenträgers (1; 10) ausgeführt wird;
in dem Schritt des Zuteilens den virtuellen Maschinen unterschiedliche Betriebsmittelkontingente zugeteilt werden in dem Schritt des Prüfens die Berechtigung einer auszuführenden Applikation (6a-6f; 24-27), auf Betriebsmittel zuzugreifen geprüft wird und in dem Schritt des Auswählens diejenige virtuelle Maschine (5a-5c; 22, 23) zum Ausführen der Applikation (6a-6f; 24-27) gewählt wird, deren zugeteilte Betriebsmittel der Berechtigung der auszuführenden Applikation (6a-6f; 24-27) entsprechen.

2. Verfahren nach Anspruch 1, **dadurch gekennzeichnet, dass** die virtuelle Maschine (5a-5c; 22, 23) ein weiteres mal nebenläufig ausgeführt wird, falls keine der nebenläufig ausgeführten virtuellen Maschinen (5a-5c; 22, 23) Betriebsmittel zugeteilt hat, die der Berechtigung der auszuführenden Applikation (6a-6f; 24-27) entsprechen.

3. Verfahren nach Anspruch 1 oder 2, **dadurch gekennzeichnet, dass** die Berechtigung der auszuführenden Applikation (6a-6f; 24-27) durch Verifizieren einer Benutzerauthentisierung und/oder einer Signatur der Applikation (6a-6f; 24-27) geprüft wird.

4. Verfahren nach einem der Ansprüche 1 bis 3, **gekennzeichnet durch**, die Schritte:
- Anfordern von Betriebsmitteln zur Ausführung aller auszuführenden Applikationen (6a-6f; 24-27) über eine gemeinsame Zugriffsschnittstelle; und
- Zuweisen der angeforderten Betriebsmittel über die Zugriffsschnittstelle (4).

5. Verfahren nach einem der Ansprüche 1 bis 4, **dadurch gekennzeichnet, dass** die nebenläufig ausgeführten virtuellen Maschinen (5a-5c; 22, 23) logisch voneinander isoliert werden, vorzugsweise mittels einer Speicherverwaltungseinheit (MMU) und/oder einer Speicherschutzeinheit (MPU).

6. Verfahren nach einem der Ansprüche 1 bis 5, **dadurch gekennzeichnet, dass** die von einer ausgeführten virtuellen Maschine (5a-5c; 22, 23) nebenläufig ausgeführten Ausführungspfade und/oder Applikationen (6a-6f;17-21) logisch voneinander isoliert werden.

7. Verfahren nach einem der Ansprüche 1 bis 6, **dadurch gekennzeichnet, dass** den ausgeführten virtuellen Maschinen (5a-5c; 22, 23) derart unterschiedliche Kontingente von Betriebsmitteln zugewiesen werden, dass die ausgeführten virtuellen Maschinen (5a-5c; 22, 23) unterschiedliche Sicherheitsstufen bieten.

8. Verfahren nach einem der Ansprüche 1 bis 7, **dadurch gekennzeichnet, dass** eine virtuelle Java-Maschine (5a-5c; 22, 23) mit einem Java-Interpreter mehrfach nebenläufig ausgeführt wird und dass Java-Bytecode-Applikationen (6a-6f; 17-21) von dem Java-Interpreter ausgeführt werden und/ oder das Verfahren auf einem Java-Card-Betriebssystem ausgeführt wird.

9. Verfahren nach Anspruch 8, **dadurch gekennzeichnet, dass** die Applikationen (6a-6f; 17-21) auf einem Web-Server als Java-Servlets ausgeführt werden.

10. Verfahren nach einem der Ansprüche 1 bis 9, **dadurch gekennzeichnet, dass** als Betriebsmittel Prozessorzeit und/oder Speicherplatz und/oder Ein/ Ausgabeschnittstellen zugeteilt werden.

11. Portabler Datenträger (1;10), umfassend Betriebsmittel einschließlich eines Prozessors (12), einen Betriebssystemkern (3; 16), der auf die Betriebsmittel Zugriff hat, und eine unter Kontrolle des Betriebssystemkerns (3; 16) von dem Prozessor (12) ausführbare virtuelle Maschine (5a-5c; 22, 23), wobei der Betriebssystemkern (3; 16) eingerichtet ist, die virtuelle Maschine (5a-5c; 22, 23) mehrfach nebenläufig auszuführen, wobei die virtuelle Maschine (5a-5c; 22, 23) eingerichtet ist, Ausführungspfade zumindest einer Applikation (6a-6f; 17-21) nebenläufig auszuführen, und
der Betriebssystemkern (3; 16) eingerichtet ist, den ausgeführten virtuellen Maschinen (5a-5c; 22, 23) unterschiedliche Betriebsmittelkontingente zuzuteilen; und
- dass der Betriebssystemkern (3; 16) eingerichtet ist, einer ausgeführten virtuellen Maschine (5a-5c; 22, 23) eine auszuführende Applikation (6a-6f; 24-27), entsprechend einer Berechtigung der Applikation (6a-6f; 24-27) auf Betriebsmittel zuzugreifen, zuzuordnen.

12. Datenträger (1;10) nach Anspruch 11, **dadurch gekennzeichnet, dass** der Betriebssystemkern (3; 16) eingerichtet ist, die virtuelle Maschine (5a-5c; 22, 23) ein weiteres mal auszuführen, falls keine der nebenläufig ausgeführten virtuellen Maschinen (5a-5c; 22, 23) Betriebsmittel zugeteilt hat, die der Berechtigung der auszuführenden Applikation (6a-6f; 24-27) entsprechen.

13. Datenträger (1;10) nach Anspruch 11 oder 12, **dadurch gekennzeichnet, dass** der Betriebssystemkern (3; 16) eingerichtet ist, die Berechtigung der auszuführenden Applikation (6a-6f; 24-27) durch Verifizieren einer Benutzerauthentisierung und/ oder einer Signatur der Applikation (6a-6f; 24-27) zu prüfen.

14. Datenträger (1;10) nach einem der Ansprüche 11 bis 13, **dadurch gekennzeichnet, dass** der Betriebssystemkern (3; 16) eine gemeinsame logische Zugriffsschnittstelle (4) für die nebenläufig ausgeführten virtuellen Maschinen (5a-5c; 22, 23) umfasst, über die Betriebsmittel von einer Applikation (6a-6f; 24-27) angefordert und von dem Betriebssystemkern (3; 16) zugewiesen werden können.

15. Datenträger (1;10) nach einem der Ansprüche 11 bis 14, **dadurch gekennzeichnet, dass** der Betriebssystemkern (3; 16) eingerichtet ist, ausgeführte virtuelle Maschinen (5a-5c; 22, 23) logisch voneinander zu isolieren.

16. Datenträger (1;10) nach Anspruch 15, **gekennzeichnet durch** eine Speicherverwaltungseinheit (MMU) und/oder eine Speicherschutzeinheit (MPU), mittels der der Betriebssystemkern (3; 16) ausgeführte virtuelle Maschinen logisch voneinander isolieren kann.

17. Datenträger (1;10) nach einem der Ansprüche 11 bis 16, **dadurch gekennzeichnet, dass** die virtuelle Maschine (5a-5c; 22, 23) eingerichtet ist, von ihr ausgeführte Applikationen (6a-6f; 17-21) logisch voneinander zu isolieren.

18. Datenträger (1;10) nach einem der Ansprüche 11 bis 17, **dadurch gekennzeichnet, dass** der Betriebssystemkern (3; 16) eingerichtet ist, ausgeführten virtuellen Maschinen (5a-5c; 22, 23) derart unterschiedliche Kontingente von Betriebsmitteln zuzuweisen, dass ausgeführte virtuelle Maschinen (5a-5c; 22, 23) unterschiedliche Sicherheitsstufen bieten.

19. Datenträger (1;10) nach einem der Ansprüche 11 bis 18, **dadurch gekennzeichnet, dass** die virtuelle Maschine (5a-5c; 22, 23) eine virtuelle Java-Maschine (5a-5c; 22, 23) mit einem Java-Interpreter ist und die Applikationen (6a-6f; 17-21) von dem Java-Interpreter ausführbare Java-Bytecode-Applikationen sind und/oder der Betriebssystemkern (3; 16) Teil des Java-Card-Betriebssystems ist.

20. Datenträger (1;10) nach Anspruch 19, **dadurch gekennzeichnet, dass** der Datenträger (1;10) einen ausführbaren Web-Server umfasst und die Applikationen (6a-6f;17-21) von dem Web-Server ausführbare Java-Servlets sind.

21. Datenträger (1; 10) nach einem der Ansprüche 11 bis 20, **dadurch gekennzeichnet, dass** die Betriebsmittel Prozessorzeit und/ oder Speicherplatz und/oder Ein-/Ausgabeschnittstellen des Datenträgers (1;10) umfassen.

22. Datenträger (1;10) nach einem der Ansprüche 11 bis 21, **dadurch gekennzeichnet, dass** der Datenträger (1;10) eine Chipkarte, sichere Multimediakarte, Mobilfunkkarte oder ein USB-Speichermedium ist.

## Claims

1. A method for executing several execution paths of at least one application (6a-6f; 24-27), comprising the steps of
- executing a virtual machine (5a-5c; 22, 23) concurrently in multiple fashion by the processor (12) of the data carrier; and
- concurrently executing at least two of the several execution paths by one of the concurrently executed virtual machines (5a-5c; 22, 23); whereby the at least two execution paths are execution paths of different applications (6a-6f; 24-27);
- allocating resource contingents to the concurrently executed virtual machines (5a-5c; 22, 23);
- checking an authorization of an application (6a-6f; 24-27) to be executed;
- selecting one of the virtual machines (5a-5c; 22, 23) for executing the application (6a-6f; 24-27);
**characterized in that**
the method is executed on a processor (12) of a portable data carrier (1; 10);
in the allocating step the virtual machines are allocated different resource contingents;
in the checking step the authorization of an application (6a-6f; 24-27) to be executed to access resources is checked; and
in the selecting step that virtual machine (5a-5c; 22, 23) is chosen for executing the application (6a-6f; 24-27) whose allocated resources correspond to the authorization of the application (6a-6f; 24-27) to be executed.

2. The method according to claim 1, **characterized in that** the virtual machine (5a-5c; 22, 23) is executed concurrently a further time if none of the concurrently executed virtual machines (5a-5c; 22, 23) has allocated resources corresponding to the authorization of the application (6a-6f; 24-27) to be executed.

3. The method according to claim 1 or 2, **characterized in that** the authorization of the application (6a-6f; 24-27) to be executed is checked by verifying a user authentication and/or a signature of the application (6a-6f; 24-27).

4. The method according to any of claims 1 to 3, **characterized by** the steps of:
- requesting resources for executing all applications (6a-6f; 24-27) to be executed, via a common access interface; and
- assigning the requested resources via the access interface (4).

5. The method according to any of claims 1 to 4, **characterized in that** the concurrently executed virtual machines (5a-5c; 22, 23) are isolated logically from each other, preferably by means of a memory management unit (MMU) and/or a memory protection unit (MPU).

6. The method according to any of claims 1 to 5, **characterized in that** the execution paths and/or applications (6a-6f; 17-21) concurrently executed by an executed virtual machine (5a-5c; 22, 23) are isolated logically from each other.

7. The method according to any of claims 1 to 6, **characterized in that** the executed virtual machines (5a-5c; 22, 23) are assigned different contingents of resources such that the executed virtual machines (5a-5c; 22, 23) offer different security levels.

8. The method according to any of claims 1 to 7, **characterized in that** a virtual Java machine (5a-5c; 22, 23) is executed concurrently in multiple fashion with a Java interpreter, and that Java byte code applications (6a-6f; 17-21) are executed by the Java interpreter and/or the method is executed on a Java Card operating system.

9. The method according to claim 8, **characterized in that** the applications (6a-6f; 17-21) are executed as Java servlets on a web server.

10. The method according to any of claims 1 to 9, **characterized in that** processor time and/or memory space and/or input/output interfaces are allocated as resources.

11. A portable data carrier (1; 10), comprising resources including a processor (12), an operating system kernel (3; 16) which has access to the resources, and a virtual machine (5a-5c; 22, 23) executable by the processor (12) under the control of the operating system kernel (3; 16), whereby
the operating system kernel (3; 16) is adapted to execute the virtual machine (5a-5c; 22, 23) concurrently in multiple fashion, whereby the virtual machine (5a-5c; 22, 23) is adapted to execute execution paths of at least one application (6a-6f; 17-21) concurrently, and
the operating system kernel (3; 16) is adapted to allocate different resource contingents to the executed virtual machines (5a-5c; 22, 23); and
that the operating system kernel (3; 16) is adapted to associate with an executed virtual machine (5a-5c; 22, 23) an application (6a-6f; 24-27) to be executed, in correspondence with an authorization of the application (6a-6f; 24-27) to access resources.

12. The data carrier (1; 10) according to claim 11, **characterized in that** the operating system kernel (3; 16) is adapted to execute the virtual machine (5a-5c; 22, 23) a further time if none of the concurrently executed virtual machines (5a-5c; 22, 23) has allocated resources corresponding to the authorization of the application (6a-6f; 24-27) to be executed.

13. The data carrier (1; 10) according to claim 11 or 12, **characterized in that** the operating system kernel (3; 16) is adapted to check the authorization of the application (6a-6f; 24-27) to be executed by verifying a user authentication and/or a signature of the application (6a-6f; 24-27).

14. The data carrier (1; 10) according to any of claims 11 to 13, **characterized in that** the operating system kernel (3; 16) comprises a common logical access interface (4) for the concurrently executed virtual machines (5a-5c; 22, 23) via which resources can be requested by an application (6a-6f; 24-27) and assigned by the operating system kernel (3; 16).

15. The data carrier (1; 10) according to any of claims 11 to 14, **characterized in that** the operating system kernel (3; 16) is adapted to isolate executed virtual machines (5a-5c; 22, 23) logically from each other.

16. The data carrier (1; 10) according to claim 15, **characterized by** a memory management unit (MMU) and/or a memory protection unit (MPU) by means of which the operating system kernel (3; 16) can isolate executed virtual machines logically from each other.

17. The data carrier (1; 10) according to any of claims 11 to 16, **characterized in that** the virtual machine (5a-5c; 22, 23) is adapted to isolate applications (6a-6f; 17-21) executed thereby logically from each other.

18. The data carrier (1; 10) according to any of claims 11 to 17, **characterized in that** the operating system kernel (3; 16) is adapted to assign different contingents of resources to executed virtual machines (5a-5c; 22, 23) such that executed virtual machines (5a-5c; 22, 23) offer different security levels.

19. The data carrier (1; 10) according to any of claims 11 to 18, **characterized in that** the virtual machine (5a-5c; 22, 23) is a virtual Java machine (5a-5c; 22, 23) with a Java interpreter, and the applications (6a-6f; 17-21) are Java byte code applications executable by the Java interpreter and/or the operating system kernel (3; 16) is part of the Java Card operating system.

20. The data carrier (1; 10) according to claim 19, **characterized in that** the data carrier (1; 10) comprises an executable web server, and the applications (6a-6f; 17-21) are Java servlets executable by the web server.

21. The data carrier (1; 10) according to any of claims 11 to 20, **characterized in that** the resources comprise processor time and/or memory space and/or input/output interfaces of the data carrier (1; 10).

22. The data carrier (1; 10) according to any of claims 11 to 21, **characterized in that** the data carrier (1; 10) is a chip card, secure multimedia card, mobile radio card or a USB storage medium.

## Revendications

1. Procédé d'exécution de plusieurs chemins d'exécution d'au moins une application (6a-6f; 24-27), comprenant les étapes
- d'une exécution concurrente multiple d'une machine virtuelle (5a-5c; 22, 23) par le processeur (12) du support de données; et
- d'une exécution concurrente d'au moins deux des plusieurs chemins d'exécution par une des machines virtuelles exécutées concurremment (5a-5c; 22, 23), les au moins deux chemins d'exécution étant des chemins d'exécution d'applications différentes (6a-6f; 24-27);
- affectation de contingents de moyens d'exploitation aux machines virtuelles exécutées concurremment (5a-5c; 22, 23);
- vérification d'une autorisation d'une application (6a-6f; 24-27) à exécuter;
- sélection d'une des machines virtuelles (5a-5c; 22, 23) pour l'exécution de l'application (6a-6f; 24-27);
**caractérisé en ce que**
le procédé est exécuté sur un processeur (12) d'un support de données portable (1; 10);
lors de l'étape de l'affectation, des contingents de moyens d'exploitation différents sont affectés aux machines virtuelles;
lors de l'étape de la vérification, l'autorisation d'une application à exécuter (6a-6f; 24-27) d'accéder à des moyens d'exploitation est vérifiée;
et
lors de l'étape de la sélection, la machine virtuelle (5a-5c; 22, 23) dont les moyens d'exploitation affectés correspondent à l'autorisation de l'application à exécuter (6a-6f; 24-27) est celle qui est sélectionnée pour l'exécution de l'application (6a-6f; 24-27).

2. Procédé selon la revendication 1, **caractérisé en ce que** la machine virtuelle (5a-5c; 22, 23) est exécutée concurremment une fois supplémentaire si aucune des machines virtuelles exécutées concurremment (5a-5c; 22, 23) n'a affecté des moyens d'exploitation qui correspondent à l'autorisation de l'application à exécuter (6a-6f; 24-27).

3. Procédé selon la revendication 1 ou 2, **caractérisé en ce que** l'autorisation de l'application à exécuter (6a-6f; 24-27) est vérifiée par vérification d'une authentification d'utilisateur et/ou d'une signature de l'application (6a-6f; 24-27).

4. Procédé selon une des revendications de 1 à 3, **caractérisé par** les étapes :
- sollicitation de moyens d'exploitation par l'intermédiaire d'une interface d'accès commune pour l'exécution de toutes les applications à exécuter (6a-6f; 24-27); et
- assignation, par l'intermédiaire de l'interface d'accès (4), des moyens d'exploitation sollicités

5. Procédé selon une des revendications de 1 à 4, **caractérisé en ce que** les machines virtuelles exécutées concurremment (5a-5c; 22, 23) sont isolées logiquement les unes des autres, de préférence au moyen d'une unité de gestion de mémoire (MMU) et/ou d'une unité de protection de mémoire (MPU).

6. Procédé selon une des revendications de 1 à 5, **caractérisé en ce que** les chemins d'exécution et/ou applications (6a-6f; 17-21) exécutés concurremment par une machine virtuelle exécutée (5a-5c; 22, 23) sont isolés logiquement les uns des autres.

7. Procédé selon une des revendications de 1 à 6, **caractérisé en ce qu'**il est assigné aux machines virtuelles exécutées (5a-5c; 22, 23) des contingents de moyens d'exploitation si différents que les machines virtuelles exécutées concurremment (5a-5c; 22, 23) offrent des niveaux de sécurité différents.

8. Procédé selon une des revendications de 1 à 7, **caractérisé en ce qu'**une machine Java virtuelle (5a-5c; 22, 23) est exécutée plusieurs fois concurremment avec un interprète Java et **en ce que** des applications Java bytecode (6a-6f; 17-21) sont exécutées par l'interprète Java et/ou le procédé est exécuté sur un système d'exploitation Java Card.

9. Procédé selon la revendication 8, **caractérisé en ce que** les applications (6a-6f; 17-21) sont exécutées sur un serveur web en tant que servlets Java.

10. Procédé selon une des revendications de 1 à 9, **caractérisé en ce que** c'est du temps de processeur et/ou de l'espace mémoire et/ou des interfaces d'entrée/sortie qui sont affectés en tant que moyens d'exploitation.

11. Support de données portable (1; 10), comprenant des moyens d'exploitation y compris un processeur (12), un noyau de système d'exploitation (3; 16) qui a accès aux moyens d'exploitation, et une machine virtuelle (5a-5c; 22, 23) exécutable par le processeur (12) sous contrôle du noyau de système d'exploitation (3; 16),
le noyau de système d'exploitation (3; 16) étant configuré pour exécuter plusieurs fois concurremment la machine virtuelle (5a-5c; 22, 23), la machine virtuelle (5a-5c; 22, 23) étant configurée pour exécuter concurremment des chemins d'exécution d'au moins une application (6a-6f; 17-21), et
le noyau de système d'exploitation (3; 16) étant configuré pour affecter aux machines virtuelles exécutées (5a-5c; 22, 23) des contingents de moyens d'exploitation différents; et
le noyau de système d'exploitation (3; 16) étant configuré pour attribuer à une machine virtuelle exécutée (5a-5c; 22, 23) une application à exécuter (6a-6f; 24-27), de manière correspondante à une autorisation de l'application (6a-6f; 24-27) à accéder à des moyens d'exploitation.

12. Support de données (1; 10) selon la revendication 11, **caractérisé en ce que** le noyau de système d'exploitation (3; 16) est configuré pour exécuter une fois supplémentaire la machine virtuelle (5a-5c; 22, 23) si aucune des machines virtuelles exécutées concurremment (5a-5c; 22, 23) n'a affecté des moyens d'exploitation qui correspondent à l'autorisation de l'application à exécuter (6a-6f; 24-27).

13. Support de données (1; 10) selon la revendication 11 ou 12, **caractérisé en ce que** le noyau de système d'exploitation (3; 16) est configuré pour vérifier, par vérification d'une authentification d'utilisateur et/ou d'une signature de l'application (6a-6f; 24-27), l'autorisation de l'application à exécuter (6a-6f; 24-27).

14. Support de données (1; 10) selon une des revendications de 11 à 13, **caractérisé en ce que** le noyau de système d'exploitation (3; 16) comprend une interface d'accès logique commune (4) pour les machines virtuelles exécutées concurremment (5a-5c; 22, 23), par l'intermédiaire desquelles des moyens d'exploitation sont sollicités par une application (6a-6f; 24-27) et peuvent être assignés par le noyau de système d'exploitation (3; 16).

15. Support de données (1; 10) selon une des revendications de 11 à 14, **caractérisé en ce que** le noyau de système d'exploitation (3; 16) est configuré pour isoler logiquement les unes des autres des machines virtuelles exécutées (5a-5c; 22, 23).

16. Support de données (1; 10) selon la revendication 15, **caractérisé par** une unité de gestion de mémoire (MMU) et/ou une unité de protection de mémoire (MPU) au moyen de laquelle le noyau de système d'exploitation (3; 16) peut isoler logiquement les unes des autres des machines virtuelles exécutées.

17. Support de données (1; 10) selon une des revendications de 11 à 16, **caractérisé en ce que** la machine virtuelle (5a-5c; 22, 23) est configurée pour isoler logiquement les unes des autres des applications (6a-6f; 17-21) exécutées par elle.

18. Support de données (1; 10) selon une des revendications de 11 à 17, **caractérisé en ce que** le noyau de système d'exploitation (3; 16) est configuré pour assigner à des machines virtuelles exécutées (5a-5c; 22, 23) des contingents de moyens d'exploitation si différents que des machines virtuelles exécutées (5a-5c; 22, 23) offrent des niveaux de sécurité différents.

19. Support de données (1; 10) selon une des revendications de 11 à 18, **caractérisé en ce que** la machine virtuelle (5a-5c; 22, 23) est une c'est du temps de processeur et/ou de l'espace mémoire et/ou des interfaces d'entrée/sortie qui sont affectés en tant que moyens d'exploitation.

20. Support de données (1; 10) selon la revendication 19, **caractérisé en ce que** le support de données (1; 10) comprend un serveur web exécutable et **en ce que** les applications (6a-6f; 17-21) sont des servlets Java exécutables par le serveur web.

21. Support de données (1; 10) selon une des revendications de 11 à 20, **caractérisé en ce que** les moyens d'exploitation comprennent du temps de processeur et/ou de l'espace mémoire et/ou des interfaces d'entrée/sortie du support de données (1; 10).

22. Support de données (1; 10) selon une des revendications de 11 à 21, **caractérisé en ce que** le support de données (1; 10) est une carte à puce, une carte multimédia sûre, une carte de téléphonie mobile ou un support USB.
